# EUROPEAN PATENT APPLICATION

(11) **EP 2 916 513 A1**
(43) Date of publication of application: **09.09.2015**
(21) Application number: 14158415.1
(22) Date of filing: 07.03.2014
(51) Int. Cl.: H04L 29/06, H04W 76/02, H04M 1/725, H04W 8/00, H04W 84/18

(54) **Method for providing peer-to-peer communication using a request-response protocol**

(71) Applicant: VOVB en Partners B.V., 3581 CK Utrecht (NL)
(72) Inventor: Kikstra, Sybren Wouter, 3583 VG Utrecht (NL)
(74) Representative: 't Jong, Bastiaan Jacob

(57) **Abstract**

The invention relates to a method for providing peer-to-peer communication between a first and a second device using a request-response protocol, which method comprises the steps of:
(a) scanning by the first device;
(b) advertising by the second device
(c) when the first device detects the advertising message of the second device sending a request for connection to the second device;
(d) returning a response by the second device upon reception of the request for connection, wherein the response includes data of the second device;
(e) scanning by the second device;
(f) advertising by the first device
(g) when the second device detects the advertising message of the first device sending a request for connection to the first device;
(h) returning a response by the first device upon reception of the request for connection, wherein the response includes data of the first device.

## Description

The invention relates to a method for providing peer-to-peer communication between a first and a second device using a request-response protocol, which method comprises the steps of:
(a) scanning by the first device;
(b) advertising by the second device
(c) discovery of the second device by the first device
(d) when the first device discovers the second device by the advertising message sending a request for connection to the second device;
(e) returning a response by the second device upon reception of the request for connection, wherein the response includes data of the second device;
(f) finalizing the connection by the first device

A typical request-response protocol between a server and a client provides a mainly one way communication path. For example with the http-protocol, a client sends a request to a server, which responds with a certain amount of data. So, the client will initiate the communication between the client and the server. With such a protocol it is not possible for the server to reach the client, without the specific request of the client.

In applications, in which two computers or other devices are connected to a network, one could select a protocol, which allows a two way communication. However, in some situations such a network is not available, for example when a number of mobile devices are in the vicinity of each other, but not connected to a mobile network. One is then restricted to the available communication means and communication protocols of the mobile devices.

More specifically, if one would like to connect two or more mobile phones, without using the common data connection via the internet, one is limited to for example a bluetooth connection or a near field communication connection. The protocols used over such connections are not suitable for two way communication.

It is accordingly an object of the invention to reduce or even remove the above mentioned disadvantages.

This object is achieved with a method for providing peer-to-peer communication using a request-response protocol according to the preamble, which is characterized by
(g) scanning by the second device;
(h) advertising by the first device
(i) discovery of the first device by the second device
(j) when the second device discovers the first device by the advertising message sending a request for connection to the first device;
(k) returning a response by the first device upon reception of the request for connection, wherein the response includes data of the first device.
(l) finalizing the connection by the second device

With a typical request-response protocol, each device has only one role in the protocol, i.e. either a server or a client role. However, according to the method of the invention, each device has both roles, so the first device is both a client and a server, and the second device is also both a client and a server.

By switching the roles of the devices, one is able to create a two way communication, while using a protocol, which is typically suited for a one way communication.

In a preferred embodiment of the invention the steps (a) - (f) and the steps (g) - (1) are performed according to a request-response protocol, in particular the Bluetooth low energy protocol.

The Bluetooth low energy (BTLE) protocol has a low power consumption and is present on a number of mobile devices, such as mobile phones. As with Classic Bluetooth technology, Bluetooth low energy technology is based on a master connected to a number of slaves. However, in Bluetooth low energy technology the number of slaves can be very large; how large only depends on implementation and available memory.

The BTLE protocol is designed for devices like a temperature sensor to advertise its capabilities and to connect, upon request, with a mobile phone, such that a user can easily read the sensor. The BTLE protocol is however not designed for two way communication. With the method according to the invention, the advantages of the BTLE protocol, such as low power consumption and presence on common used mobile phones, can still be used.

In another embodiment of the method according to the invention the advertising message comprises an identifier for the advertising device, and wherein the identifier is stored by the scanning device.

In a further preferred embodiment of the method according to the invention the steps (a)-(f) and the steps (g) - (l) are repeated and upon re-detecting an already stored identifier in the advertising message of an advertising device by a scanning device, the received signal strength indicator is measured and stored by the scanning device.

When a connection already has been setup between the first and second device and data has been transferred from either device, it is not always necessary to reconnect and transfer the same data again upon re-detection of the advertising device.

Only the presence of the advertising device could be sufficient information and based on the received signal strength indicator an estimate can be made of the distance of the advertising device relative to the scanning device.

Possibly, a timestamp can be stored when detecting the advertising device, such that it can be quickly detected when an advertising device is permanently out of range and the identifier no longer needs to be stored. The estimation of the distance could also contribute to this determination.

In a further preferred embodiment the steps (d) - (f) and (j) - (l) are skipped after measuring the received signal strength indicator.

In yet another preferred embodiment of the method according to the invention the scanning interval and the advertising interval of both the first device and second device are chosen randomly.

By choosing a random scanning interval and advertising interval for both first and second devices, it is prevented that both devices switch constantly at the same time from the scanning mode to the advertising mode and back. By having random intervals, even by starting at the same time in the scanning mode, there will be after a first random interval a situation in which at least one of the first and second device is in scanning mode and the other in advertising mode.

Preferably, the scanning interval and the advertising interval are chosen randomly from a predefined range.

Using a predefined range ensures that the switching between modes is done not too quickly but also not too lazy, such that a responsive communication can be obtained.

Although in the above only a first and second device is mentioned, a scanning device can detect a plurality of advertising devices.

Accordingly, the invention further relates to a combination of a plurality of devices, wherein each device performs the method according to the invention.

When each of the plurality of devices performs the method according to the invention, the devices will, after a period of time, be aware of all the other devices within their ranged.

In such a combination according to the invention the first device is any of the plurality of devices and the second device is any of the remaining plurality of devices.

It is important to note, that from the view of the first device and in view of the method, the second device can change. When the first device is scanning, it will discover a second device. After connecting to this second device and disconnecting therefrom, it will continue to scan for other devices during its scanning interval. Then a next device can be discovered, which would, in view of the method, again be considered a second device.

These and other features of the invention will be elucidated in conjunction with the accompanying drawings.

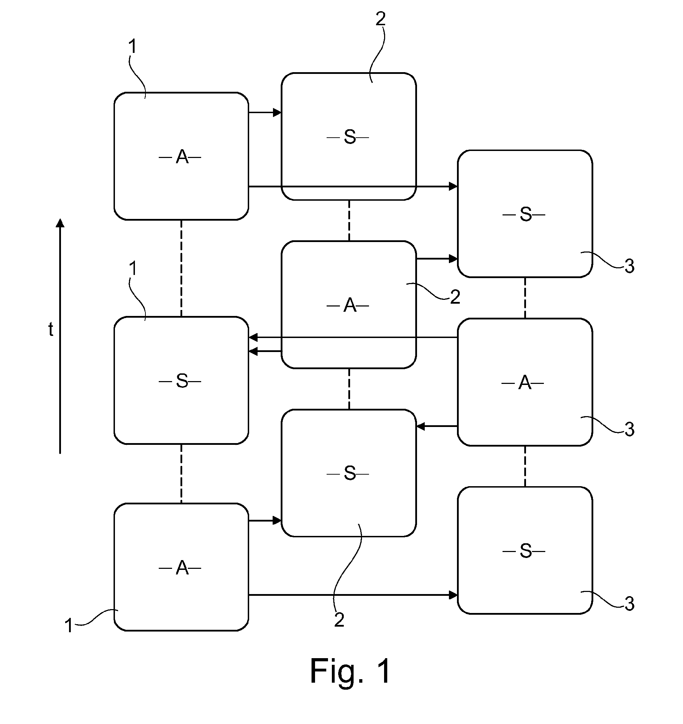

The figure shows a schematic view of an embodiment of the method according to the invention. In the figure, time is running on a linear scale from bottom to top.

In this embodiment three devices 1, 2, 3 are shown, which each can adapt a scanning mode (-S-) or an advertising mode (-A-).

Each device changes from a scanning mode (-S-) to an advertising mode (-A-) and back with random time intervals.

At the start of the diagram, the first device 1 is in an advertising mode (-A-), while the third device 3 is in a scanning mode (-S-). After a while the second device 2 becomes also present and starts in the scanning mode (-S).

As the first device 1 is in the advertising mode (-A-), the other two devices 2, 3 will detect this and each device 2, 3 will request a connection to retrieve data from the first device 1.

After a random time interval, the third device 3 will switch from a scanning mode (-S-) to an advertising mode (-A). This will be detected by the second device 2, which will request a connection to receive data from the third device 3.

In the meantime, the first device switches to a scanning mode (-S-) and detect the advertising third device 3 and the second device, as soon as it switches also to the advertising mode. The first device 1 will retrieve data from both the second device 2 and the third device 3.

At this stage, the first device 1 and third device 3 will have a two way communication. Also, the first device 1 and the second device 2 will have had a two way communication.

Then the third device 3 will switch back to the scanning mode (-S-) and detect the second advertising device 2, such that also between the second device and the third device 3 a two way communication has taken place.

Finally, with respect to the figure, the first device 1 and second device 2 will change mode again. Both the second device 2 and the third device 3 will detect the advertising first device 1. Upon re-detecting the first device 1 by the second and third devices 2, 3 the received signal strength indicator is measured and stored for a future redetection.

This repeated rediscovery facilitates each device Di with i in [1 ... n] in a set of n devices D1 ... Dn to keep track in real time of an updated list of 'near' devices in D1 ... Dn excluding Di, with estimates of the distances of D1 ... Dn excluding Di to device Di, and any of D1 ... Dn can be queried by Di at any time for additional data.

Based on the received signal strength indicator one could estimate the distance. For example the following definition could be set for the estimated distance:
* Immediate: Relative Signal Strength Indicator (RSSI) >= -75.0 dBm, corresponding to 1-5 meters.
* Near: RSSI < -75.0 dBm, corresponding to 5-20 meters.
* Far: RSSI < -95.0 dBm, corresponding to 20-50 meters

## Claims

1. Method for providing peer-to-peer communication between a first and a second device using a request-response protocol, which method comprises the steps of:
(a) scanning by the first device;
(b) advertising by the second device
(c) discovery of the second device by the first device
(d) when the first device discovers the second device by the advertising message sending a request for connection to the second device;
(e) returning a response by the second device upon reception of the request for connection, wherein the response includes data of the second device;
(f) finalizing the connection by the first device. **characterized by**
(g) scanning by the second device;
(h) advertising by the first device
(i) discovery of the first device by the second device
(j) when the second device discovers the first device by the advertising message sending a request for connection to the first device;
(k) returning a response by the first device upon reception of the request for connection, wherein the response includes data of the first device.
(l) finalizing the connection by the second device.

2. Method according to claim 1, wherein the steps (a) - (f) and the steps (g) - (l) are performed according to a request-response protocol, in particular the Bluetooth low energy protocol.

3. Method according to claim 1 or 2, wherein the advertising message comprises an identifier for the advertising device, and wherein the identifier is stored by the scanning device.

4. Method according to claim 3, wherein the steps (a)-(f) and the steps (g) - (l) are repeated and wherein upon re-detecting an already stored identifier in the advertising message of an advertising device by a scanning device, the received signal strength indicator is measured and stored by the scanning device.

5. Method according to claim 4, wherein the steps (d) - (f) and (j) - (l) are skipped after measuring the received signal strength indicator.

6. Method according to any of the preceding claims, wherein the scanning interval and the advertising interval of both the first device and second device are chosen randomly.

7. Method according to claim 6, wherein the scanning interval and the advertising interval are chosen randomly from a predefined range.

8. Combination of a plurality of devices, wherein each device performs the method according to any of the preceding claims.

9. Combination according to claim 8, wherein the first device is any of the plurality of devices and wherein the second device is any of the remaining plurality of devices.
